# EUROPÄISCHE PATENTSCHRIFT

(11) **EP 2 411 633 B1**
(45) Veröffentlichungstag und Bekanntmachung des Hinweises auf die Patenterteilung: **16.01.2013**
(21) Anmeldenummer: 10710234.5
(22) Anmeldetag: 20.03.2010
(51) Int. Cl.: F01L 1/04, B21D 53/84, F16H 53/02

(54) **WELLE-NABE-VERBINDUNG**
SHAFT-HUB CONNECTION
LIAISON À ARBRE ET MOYEU

(30) Priorität: 25.03.2009 DE 102009014895
(43) Veröffentlichungstag der Anmeldung: 01.02.2012
(73) Patentinhaber: Audi AG, 85045 Ingolstadt (DE)
(72) Erfinder: SCHMIDT, Hans, Bernd, 90449 Nürnberg (DE)
(74) Vertreter: Geissler, Manfred
(86) Internationale Anmeldenummer: PCT/EP2010/001761
(87) Internationale Veröffentlichungsnummer: WO 2010/108636

(56) Entgegenhaltungen:
- EP-A1- 0 282 166
- EP-A1- 0 745 757
- DE-A1-102006 035 082
- GB-A- 2 290 599
- GB-A- 2 298 909

## Beschreibung

Die Erfindung betrifft eine Welle-Nabe-Verbindung für gebaute Nockenwellen für Brennkraftmaschinen gemäß dem Oberbegriff des Patentanspruches 1.

Welle-Nabe-Verbindungen, bei denen das jeweilige Funktionsteil mit Presssitz oder Schrumpfsitz auf der Welle befestigt ist, sind in einer Vielzahl von technischen Anwendungen bekannt. Beispielsweise ist es für gebaute Nockenwellen für Brennkraftmaschinen bekannt, die einzelnen Nocken durch Presssitz oder Schrumpfsitz auf der Welle festzulegen. Voraussetzung dafür ist aber, dass die jeweiligen Abschnitte der Welle für die Nocken einen in Montagerichtung gesehen gestuften oder zumindest gleichen Außendurchmesser aufweisen. Ist konstruktionsbedingt eine Konfiguration gegeben, bei der ein Abschnitt der Welle in Montagerichtung gesehen einen kleineren Durchmesser als der Vorhergehende hat, so kann das korrespondierende Funktionsteil nicht mehr aufgepresst oder aufgeschrumpft werden, weil es über den Abschnitt größeren Durchmessers nicht aufschiebbar ist.

Aus der GB 2 290 599 A ist eine gattungsgemäße Welle-Nabe-Verbindung bekannt, bei der ein erster und ein zweiter Nocken in einer Montagerrichtung mit ihrer Nabe auf korrespondierende erste und zweite Wellenabschnitte aufgeschrumpft oder aufgepresst sind. Der Außenumfang des in der Montagerichtung ersten Wellenabschnittes weist eine Steckverzahnung auf. Deren Zahnhöhe variiert zwischen zwei Grundkreisen. Bei der Montage wird in der Montagerichtung über den ersten Wellenabschnitt der zweite Nocken aufgeschoben, der eine zur Steckverzahnung des ersten Wellenabschnittes korrespondierende Steckverzahnung am Innenumfang aufweist und deren Zahnhöhe zwischen zwei Grundkreisen variiert, wobei im Fügezustand der kleinere Grundkreis und der größere Grundkreis des zweiten Funktionsteils jeweils um ein Spiel größer als die korrespondierenden Grundkreise des ersten Wellenabschnittes bemessen sind.

Aufgabe der Erfindung ist es, eine Welle-Nabe-Verbindung der gattungsgemäßen Art vorzuschlagen, bei der es mit geringem Mehraufwand gelingt, einen Nocken eines einen geringeren Durchmesser aufweisenden Abschnittes der Welle dennoch durch eine Press- oder Schrumpfverbindung zu fügen.

Die Aufgabe ist durch die Merkmale des Patentanspruches 1 gelöst. Vorteilhafte und besonders zweckmäßige Weiterbildungen der Erfindung sind in den Unteransprüchen angeführt.

Der prozentuelle Traganteil zwischen den jeweiligen Fügepartnern Wellenabschnitt der Welle : Nocken kann je nach den spezifischen Anforderungen in einem Bereich von 20 : 80 bis 80 : 20, insbesondere jedoch bei 50 : 50, liegen.

Ein Ausführungsbeispiel der Erfindung ist im Folgenden anhand der beiliegenden Zeichnung näher erläutert. Es zeigen:
- Fig. 1: eine nur teilweise dargestellte, gebaute Nockenwelle für Brennkraftmaschinen, bei der mehrere Nocken auf Wellenabschnitte der Welle aufgeschrumpft sind;
- Fig. 2: einen Querschnitt gemäß Linie II - II der Fig. 1 durch einen ersten Wellenabschnitt der Welle, die einen ersten Nocken trägt;
- Fig. 3: einen weiteren Querschnitt gemäß Linie III - III der Fig. 1 durch einen zweiten Wellenabschnitt der Welle, die einen zweiten Nocken aufnimmt; und
- Fig. 4: einen Querschnitt gemäß Linie IV - IV der Fig. 1 durch den ersten Wellenabschnitt der Welle und den korrespondierenden ersten Nocken.

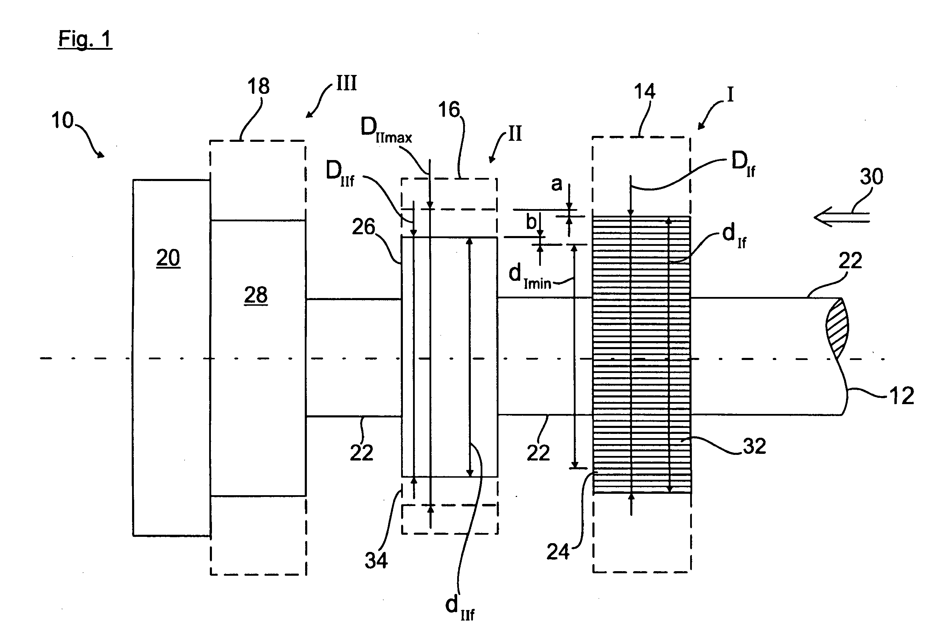

In den Fig. 1 bis 4 ist teilweise eine Nockenwelle 10 für Brennkraftmaschinen dargestellt, mit einer Welle 12, auf der u.a. mehrere Nocken 14, 16, 18 (in Fig. 1 gestrichelt angedeutet) angeordnet sind.

Die Welle 12 weist Abschnitte 20, 22 auf, die Verbindungsabschnitte oder rotationssymmetrische Lagerabschnitte bilden. An die Abschnitte 20, 22 schließen rotationssymmetrische Wellenabschnitte 24, 26, 28 der Welle 12 an, die die besagten Nocken 14, 16, 18 tragen. Dabei sitzt in der Fig. 1 der Nocken 14 in einem ersten Fügeverband I kraftschlüssig in Presspassung auf dem Wellenabschnitt 24. In gleicher Weise sitzen die Nocken 16, 18 in einem zweiten und dritten Fügeverband II, III auf den zugehörigen Wellenabschnitten 26,28.

Konstruktionsbedingt ist die Welle 12 so aufgebaut, dass der Lagerabschnitt 20 den größten Außendurchmesser aufweist, so dass von dieser Seite her die Nocken 14, 16, 18 nicht auf die Welle 12 aufschiebbar sind.

Ferner sind die Außendurchmesser der die Nocken 14, 16 tragenden Wellenabschnitte 24, 26 konstruktionsbedingt so ausgeführt, dass der Außendurchmesser d_{IIf} des mittleren Wellenabschnittes 26 kleiner als der Außendurchmesser d_{If} des ersten Wellenabschnittes 24 ist.

Die Nocken 14, 16, 18 werden von der dem Lagerabschnitt 20 abgewandten Seite auf die Welle 12 beziehungsweise deren tragende Wellenabschnitte 24, 26, 28 gefügt. Dies erfolgt mit Presssitz oder Schrumpfsitz, wobei in bekannter Weise die Außendurchmesser der Wellenabschnitte 24, 26, 28 gegenüber den Bohrungen der Naben der Nocken 14, 16, 18 mit Übermaß gefertigt sind und die Nocken entweder aufgepresst oder durch Erwärmung aufgeschrumpft werden.

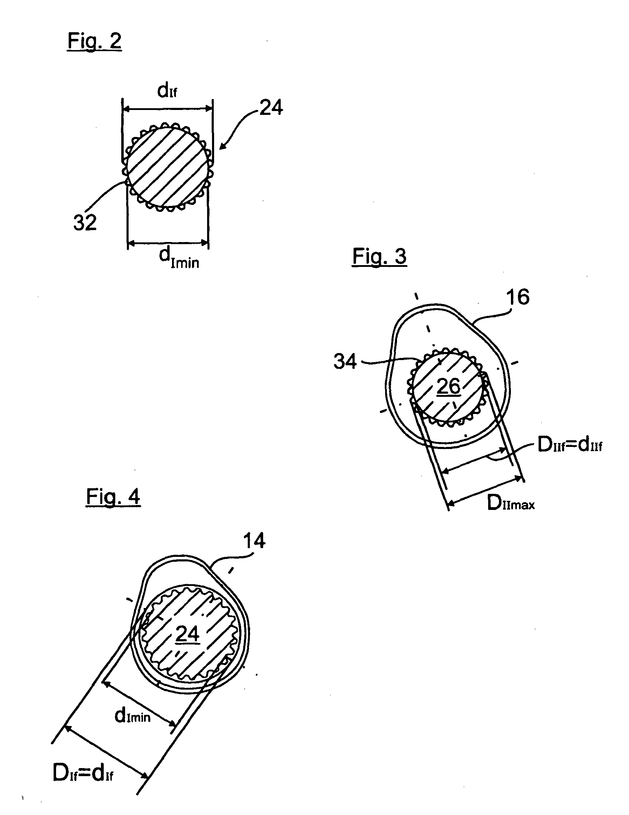

Damit der Nocken 16 des mittleren Wellenabschnittes 26 mit der genannten Fügeverbindung montiert werden kann, ist in Montagerichtung (Pfeil 30) gesehen der erste Wellenabschnitt 24 der Welle 12 mit einem Außenumfang ausgeführt, der einen kleineren Grundkreis d_{Imin} (vgl. Fig. 2) und einen größeren Grundkreis d_{If} aufweist.

Dazu ist der Wellenabschnitt 24 mit einer Steckverzahnung 32 versehen, bei der der Kopfkreisdurchmesser den größeren Grundkreis d_{If} und der Fußkreisdurchmesser den kleineren Grundkreis d_{Imin} bildet. Der Grundkreis d_{Imin} ist dabei um ein Maß b geringfügig kleiner als der Innendurchmesser D_{IIf} des Nockens 16.

Ferner ist die Nabe des in Montagerichtung 30 gesehen zweiten Nockens 16 mit einer korrespondierenden Steckverzahnung 34 (vgl. Fig. 3) ausgeführt, deren kleinerer Grundkreis D_{IIf} durch den Kopfkreisdurchmesser und deren größerer Grundkreis D_{IImax} durch den Fußkreisdurchmesser gebildet ist. Der größere Grundkreis D_{IImax} ist im Durchmesser wiederum geringfügig um ein Maß a größer als der Außendurchmesser d_{If} des Wellenabschnittes 24 der Welle 12.

Die Außendurchmesser d_{If} des ersten Wellenabschnittes 24 und d_{IIf} des mittleren Wellenabschnittes 26 werden auch als Funktionsdurchmesser bezeichnet, auf denen die Nocken 14, 16 mit ihren korrespondierenden Funktionsdurchmessern D_{If} und D_{IIf} aufgepresst sind. In den Figuren sind die Grundkreise des Nockens 16 sowie des ersten Wellenabschnittes 24 aus Gründen der Übersichtlichkeit nicht maßstabsgetreu wiedergegeben.

Die Steckverzahnung 32, 34 ist so ausgeführt, dass die Kopfbereiche und die Fußbereiche der Zähne verrundet sind. Ferner ist die Steckverzahnung symmetrisch derart gefertigt, dass der prozentuelle Traganteil zwischen der Nabe der Nocken 18 16 an den Wellenabschnitten 28, 26 prozentuell 50 : 50 beträgt.

Die Fügepartner des ersten Wellenabschnittes 24 der Welle 12 und des zweiten Nockens 16 sind in einfacher Weise glattzylindrisch ausgeführt. So ist der Wellenabschnitt 26 zum Beispiel durch Drehen oder Schleifen maßgerecht gefertigt, während die Nabe des Nockens 14 feingebohrt oder gehont ist.

Der mit zwei Grundkreisen d_{If}, d_{Imin} hergestellte Außenumfang des ersten Wellenabschnittes 24 ist zum Beispiel durch ein Wälzwerkzeug eingeformt und anschließend der Außendurchmesser d_{If} auf Maß geschliffen; der Innendurchmesser D_{IIf} der Nabe des Nockens 16 ist feingebohrt und anschließend durch Räumen auf D_{IImax} beziehungsweise geringfügig größer erweitert.

Zum Fügen der beiden Nocken 14, 16 auf den Wellenabschnitten 24, 26 ist der Außendurchmesser d_{IIf} des Wellenabschnittes 26 maßlich mit dem Innendurchmesser D_{IIf} des Nockens 16 und der Außendurchmesser d_{If} des Wellenabschnittes 24 mit dem Innendurchmesser D_{If} des Nockens 14 mit geringer maßlicher Überdeckung hergestellt.

Hingegen ist der kleinere Grundkreis d_{Imin} des Wellenabschnittes 24 geringfügig um das Maß b kleiner als der Innendurchmesser D_{IIf} des Nockens 16. Ferner ist der größere Grundkreis D_{IImax} des Nockens 16 geringfügig um das Maß a größer als der Außendurchmesser d_{If} des Wellenabschnittes 24.

Daraus resultiert, dass bei der Montage der Nocken der zweite (mittlere) Nocken 16 kraftfrei über den Wellenabschnitt 24 geschoben werden kann, wobei die Steckverzahnung 32, 34 entsprechend ineinander greift.

Sodann kann der Nocken 16 auf den Wellenabschnitt 26 der Welle 12 aufgeschrumpft oder aufgepresst werden. Der Festsitz wird durch die maßliche Überdeckung zwischen d_{IIf} und D_{IIf} erreicht.

Anschließend wird der Nocken 14 auf den Wellenabschnitt 24 aufgeschrumpft oder aufgepresst, wobei der Festsitz hier durch die maßliche Überdeckung zwischen d_{If} und D_{If} erzielt ist.

## Patentansprüche

1. Welle-Nabe-Verbindung an gebauten Nockenwellen (10) für Brennkraftmaschinen, mit einer Welle (12), bei der zumindest ein erster Nocken (14) und ein in einer Montagerichtung (30) dahinter liegender zweiter Nocken (16) in der Montagerrichtung (30) mit ihrer Nabe auf korrespondierende, in der Montagerichtung (30) gesehen erste und zweite Wellenabschnitte (24, 26) entweder aufgeschrumpft oder aufgepresst sind, wobei der Außenumfang des ersten Wellenabschnittes (24) eine Steckverzahnung (32) mit einem Fußkreisdurchmesser (d_{Imin}) und einem Kopfkreisdurchmesser (d_{If}) aufweist, über welchen ersten Wellenabschnitt (24) der zweite Nocken (16) kraftfrei geschoben wird, der eine dazu korrespondierende Steckverzahnung (34) mit einem Fußkreisdurchmesser (D_{IImax}) und einem Kopfkreisdurchmesser (D_{IIf}) am Innenumfang aufweist, wobei der Kopfkreisdurchmesser (D_{IIf}) des zweiten Nockens (16) um ein Spiel (b) größer als der Fußkreisdurchmesser (d_{Imin}) des ersten Wellenabschnitts (24) und der Fußkreisdurchmesser (D_{IImax}) des zweiten Nockens (16) um ein Spiel (a) größer als der Kopfkreisdurchmesser (d_{If}) des ersten Wellenabschnittes (24) bemessen sind, **dadurch gekennzeichnet, dass** in der Montagerichtung (30) der Nocken (14, 16) der Kopfkreisdurchmesser (d_{If}) des ersten Wellenabschnitts (24) größer als der Außendurchmesser (d_{IIf}) des zweiten Wellenabschnitts (26) ausgebildet ist, und dass der Außenumfang des zweiten Wellenabschnittes (26) und der Innenumfang des ersten Nockens (14) glattzylindrisch ausgeführt sind.

2. Welle-Nabe-Verbindung nach Anspruch 1, **dadurch gekennzeichnet, dass** die Welle (12) einen Lagerabschnitt (20) aufweist, der den größten Außendurchmesser aufweist, so dass von dieser Seite her die Nocken (14, 16, 18) nicht auf die Welle (12) aufschiebbar sind, wobei die Nocken (14, 16, 18) von der dem Lagerabschnitt (20) abgewandten Seite auf die Welle (12) gefügt werden.

3. Welle-Nabe-Verbindung nach Anspruch 1 oder 2, **dadurch gekennzeichnet, dass** der Wellenabschnitt (26) durch Drehen oder Schleifen maßgerecht gefertigt ist, während die Nabe des Nockens (14) feingebohrt oder gehont ist.

4. Welle-Nabe-Verbindung nach einem der vorhergehenden Ansprüche, **dadurch gekennzeichnet, dass** der mit einem Kopf- und einem Fußkreisdurchmesser (d_{If}, d_{Imin}) hergestellte Außenumfang des ersten Wellenabschnittes (24) durch ein Wälzwerkzeug eingeformt und anschließend der Kopfkreisdurchmesser (d_{If}) des ersten Wellenabschnittes (24) auf Maß geschliffen ist.

5. Welle-Nabe-Verbindung nach Anspruch 4, **dadurch gekennzeichnet, dass** der Kopfkreisdurchmesser (D_{IIf}) der Nabe des Nockens (16) feingebohrt und anschließend durch Räumen auf den Fußkreisdurchmesser (D_{IImax}) erweitert ist.

## Claims

1. Shaft-hub connection on assembled camshafts (10) for internal combustion engines, comprising a shaft (12) in which the hubs of at least a first cam (14) and a second cam (16) following said first cam in an assembly direction (30) are either shrunk onto or pressed onto corresponding first and second, when viewed in the assembly direction (30), shaft portions (24, 26), the outer circumference of the first shaft portion (24) having a spline (32) with a root diameter (d_{Imin}) and a tip diameter (d_{If}), over which first shaft portion (24) the second cam (16) is slid without applying a force, which second cam has a corresponding spline (34) with a root diameter (D_{IImax}) and a tip diameter (D_{IIf}) at the inner circumference, the tip diameter (D_{IIf}) of the second cam (16) being dimensioned so as to be larger by a clearance (b) than the root diameter (d_{Imin}) of the first shaft portion (24) and the root diameter (D_{IImax}) of the second cam (16) being dimensioned so as to be larger by a clearance (a) than the tip diameter (d_{If}) of the first shaft portion (24), **characterised in that**, in the assembly direction (30) of the cams (14, 16), the tip diameter (d_{If}) of the first shaft portion (24) is formed so as to be larger than the outer diameter (d_{IIf}) of the second shaft portion (26), and **in that** the outer circumference of the second shaft portion (26) and the inner circumference of the first cam (14) are constructed as smooth cylinders.

2. Shaft-hub connection according to claim 1, **characterised in that** the shaft (12) has a bearing portion (20) which has the largest outer diameter, such that the cams (14, 16, 18) cannot be slid onto the shaft (12) from this end, the cams (14, 16, 18) being fitted onto the shaft (12) from the end which is remote from the bearing portion (20).

3. Shaft-hub connection according to either claim 1 or claim 2, **characterised in that** the shaft portion (26) is machined to size by turning or grinding, whereas the hub of the cam (14) is precision-bored or honed.

4. Shaft-hub connection according to any of the preceding claims, **characterised in that** the outer circumference of the first shaft portion (24), which is produced with a tip and root diameter (d_{If}, d_{Imin}), is shaped by a self-generating milling cutter and the tip diameter (d_{If}) of the first shaft portion (24) is then ground to size.

5. Shaft-hub connection according to claim 4, **characterised in that** the tip diameter (D_{IIf}) of the hub of the cam (16) is precision-bored and then extended by broaching to the root diameter (D_{IImax}).

## Revendications

1. Liaison arbre-moyeu sur des arbres à cames (10) installés pour moteurs à combustion interne, comprenant un arbre (12), dans lequel au moins une première came (14) et une seconde came (16) qui se trouve derrière celle-ci dans le sens de montage (30) sont frettées ou emmanchées par pression avec leur moyeu sur une première et une seconde section d'arbre (24, 26) correspondantes, observées dans le sens de montage (30), dans laquelle la périphérie externe de la première section d'arbre (24) présente une denture de couplage (32) avec un diamètre de pied de denture (d_{Imin}) et un diamètre de cercle de tête (d_{If}), via laquelle première section d'arbre (24) coulisse sans application de force la seconce came (16) , qui présente une denture de couplage (34) qui lui correspond avec un diamètre de pied de denture (D_{IImax}) et un diamètre de cercle de tête (D_{IIf}) sur la périphérie interne, dans laquelle le diamètre de cercle de tête (D_{IIf}) de la seconde came (16) est dimensionné plus grand d'un jeu (b) que le diamètre de pied de denture (d_{Imin}) de la première section d'arbre (24) et le diamètre de pied de denture (d_{IImax}) de la seconde came (16) plus grand d'un jeu (a) que le diamètre de cercle de tête (d_{If}) de la première section d'arbre (24), **caractérisée en ce que**, dans le sens de montage (30) des cames (14, 16), le diamètre de cercle de tête (d_{If}) de la première section d'arbre (24) est formé plus grand que le diamètre externe (d_{IIf}) de la seconde section d'arbre (26) et **en ce que** la périphérie externe de la seconde section d'arbre (26) et la périphérie interne de la première came (14) sont cylindriques à surface lisse.

2. Liaison arbre-moyeu selon la revendication 1, **caractérisée en ce que** l'arbre (12) présente une section de palier (20), qui présente le plus grand diamètre externe de sorte que, de ce côté, les cames (14, 16, 18) ne puissent pas coulisser sur l'arbre (12), les cames (14, 16, 18) étant ajustées sur l'arbre du côté opposé à la section de palier (20).

3. Liaison arbre-moyeu selon la revendication 1 ou la revendication 2, **caractérisée en ce que** la section d'arbre (26) est fabriquée selon les dimensions prescrites par façonnage au tour ou dressage à la meule, tandis que le moyeu de la came (14) est soumis à un perçage de précision ou à un honage.

4. Liaison arbre-moyeu selon l'une quelconque des revendications quelconques, **caractérisée en ce que** la périphérie externe de la première section d'arbre (24) fabriquée avec un diamètre de cercle de tête et un diamètre de pied de denture (d_{If}, d_{Imin}) est formée par un outil de taille en développante et ensuite meulée sur mesure au diamètre de cercle de tête (d_{If}) de la première section d'arbre (24).

5. Liaison arbre-moyeu selon la revendication 4, **caractérisée en ce que** le diamètre de cercle de tête (D_{IIf}) du moyeu de la came (16) est foré avec précision et ensuite élargi par brochage sur le diamètre de pied de denture (D_{IImax}).
